# EUROPEAN PATENT APPLICATION

(11) **EP 2 475 197 A1**
(43) Date of publication of application: **11.07.2012**
(21) Application number: 09848755.6
(22) Date of filing: 31.08.2009
(51) Int. Cl.: H04W 16/32, H04W 16/08, H04W 92/10

(54) **MOBILE COMMUNICATION SYSTEM, MOBILE STATION DEVICE, BASE STATION DEVICE, AND ELECTRIC WAVE INTERFERENCE REDUCING METHOD**

(71) Applicant: Fujitsu Limited, Kawasaki-shi, Kanagawa 211-8588 (JP)
(72) Inventor: KIMURA, Bun, Kawasaki-shi Kanagawa 211-8588 (JP); TOMITA, Tetsuo, Kawasaki-shi Kanagawa 211-8588 (JP)
(74) Representative: Hutchison, James
(86) International application number: PCT/JP2009/065199
(87) International publication number: WO 2011/024310

(57) **Abstract**

A mobile communication system includes: a first base station apparatus having a first communication coverage area; at least one second base station apparatus having a second communication coverage area smaller than the first communication coverage area and capable of adjusting radiowave transmit power thereof; and a mobile station apparatus capable of connecting via radio to the first base station apparatus or to the at least one second base station apparatus. When the mobile station apparatus is connected via radio to the first base station apparatus and is receiving a radiowave interfering with a radiowave received from the first base station apparatus, the mobile station apparatus transmits a transmit power reduction request command to any one of the second base station apparatuses to request reducing the radiowave transmit power thereof, and of the second base station apparatuses, the base station apparatus that received the transmit power reduction request command from the mobile station apparatus reduces the radiowave transmit power.

## Description

### FIELD

The embodiments disclosed herein are related to a mobile communication system, a mobile station apparatus, a base station apparatus, and a method for reducing radiowave interference that may occur at the mobile station apparatus.

### BACKGROUND

In recent years, base station apparatuses having small communication coverage areas of up to several tens of meters in radius have been developed for installation in such places as indoor or underground locations where radiowaves from base station apparatuses having wide communication coverage areas are difficult to reach. Base station apparatuses having such small communication coverage areas are referred to as femto base station apparatuses. On the other hand, base station apparatuses having wide communication coverage areas (for example, ranging from several hundred meters to a dozen or so kilometers in radius) are referred to as macro base station apparatuses.

By installing such a femto base station apparatus in a place where radiowaves from the macro base station apparatus are difficult to reach, the communication coverage area of a mobile station apparatus such as a mobile phone can be extended. Further, when a large number of femto base station apparatuses are installed, the number of mobile station apparatuses connected to one base station apparatus decreases. This serves to improve communication services for mobile users.

However, since the macro base station apparatus and the femto base station apparatus use the same frequency range, for example, for transmitting radiowave signals on a common control channel, interference may occur at the mobile station apparatus between the radiowaves arriving from the macro base station apparatus and the radiowaves arriving from the femto base station apparatus. If such interference occurs, radiowave reception conditions at the mobile station apparatus degrade, and the mobile station apparatus may not be able to reproduce the received signal. This may result in a disconnection of the radio link between the mobile station apparatus and the base station apparatus, a reduction in communication throughput, or a degradation in the quality of the voice received by the mobile station apparatus.

In view of the above, technologies for reducing such interference have been proposed in the prior art (for example, refer to patent documents 1 and 2). In one such prior art example, an upper node apparatus calculates the degree of physical proximity between a home base station apparatus and a mobile station apparatus, based on the location information of the home base station apparatus whose communication coverage area is smaller than that of a macro base station and on the location information of the mobile station apparatus. Then, when they are not located proximate to each other, the upper node apparatus disables the radio unit of the home base station apparatus.

In another prior art example, an indoor base station monitors an uplink inter-cell interference level. Then, responding to the uplink inter-cell interference level reaching a predetermined threshold level, the indoor base station synchronizes with an uplink transmission signal received from at least one potentially interfering user equipment which is connected to an outdoor base station but outside the downlink coverage area of the indoor base station. The interfering user equipment is commanded, via a downlink control channel of the outdoor base station, to lower the transmission power of the uplink transmission signal, and to thereby decrease the uplink inter-cell interference level on the indoor base station.

### PRIOR ART DOCUMENTS

### Patent Documents

Patent document 1: Japanese Laid-open Patent Publication No. 2009-49485
Patent document 2: Tokuhyou (Published Japanese Translation of PCT application) No. 2008-529375

### SUMMARY

### Problem to be Solved by the Invention

Even if the femto base station apparatus is allowed to transmit radiowaves only when the mobile station apparatus is located proximate to it, if the mobile station apparatus is receiving radiowaves from the macro base station apparatus, the radiowaves arriving from the macro base station apparatus may interfere at the mobile station apparatus with the radiowaves arriving from the femto base station apparatus.

Further, the radiowave transmission range of the base station apparatus varies depending on objects such as buildings located in the radiowave path between the base station apparatus and the mobile station apparatus. Accordingly, the femto base station apparatus transmitting radiowaves interfering with the radiowaves that the mobile station apparatus is receiving from the macro base station apparatus is unable to be identified by the distance relative to the mobile station apparatus. As a result, there can occur cases where the radiowaves arriving from the femto base station apparatus interfere with the radiowaves arriving from the macro base station apparatus at the mobile station apparatus that is not currently communicating with that femto base station apparatus. Only the apparatus that is actually receiving the radiowaves can detect whether a degradation of reception conditions has occurred because of radiowave interference. Accordingly, if the upper node apparatus determines whether to enable or disable the radio unit of the femto base station apparatus simply based on the distance between the mobile station apparatus and the femto base station apparatus, it may not be possible to solve the radiowave interference problem occurring at the mobile station apparatus.

On the other hand, according to the technology that reduces radiowave interference occurring at the indoor base station apparatus, the mobile station apparatus transmitting interfering radiowaves is identified by causing the indoor base station apparatus to synchronize with the interfering mobile station apparatus. However, when radiowave interference occurs at the mobile station apparatus, the mobile station apparatus may not be able to acquire control information from the interfering radiowaves, because the femto base station apparatus radiates radiowaves only sufficient enough to cover its limited communication coverage area. In such cases, the mobile station apparatus is unable to identify the femto base station apparatus radiating the radiowaves causing the radiowave interference. Accordingly, with the technology that reduces radiowave interference occurring at the indoor base station apparatus, it is difficult to reduce radiowave interference occurring at the mobile station apparatus.

In view of the above situation, it is an object of the present invention to provide a mobile communication system, mobile station apparatus, base station apparatus, and radiowave interference reducing method that can reduce the radiowave interference occurring at the mobile station apparatus.

### Means for Solving the Problem

According to one embodiment, a mobile communication system is provided. The mobile communication system includes: a first base station apparatus having a first communication coverage area; at least one second base station apparatus having a second communication coverage area smaller than the first communication coverage area and capable of adjusting radiowave transmit power thereof; and a mobile station apparatus capable of connecting via radio to the first base station apparatus or to the at least one second base station apparatus. When the mobile station apparatus is connected via radio to the first base station apparatus and is receiving a radiowave interfering with a radiowave received from the first base station apparatus, the mobile station apparatus transmits a transmit power reduction request command to any one of the second base station apparatuses to request reducing the radiowave transmit power thereof, and of the second base station apparatuses, the base station apparatus that received the transmit power reduction request command from the mobile station apparatus reduces the radiowave transmit power.

According to another embodiment, a mobile station apparatus is provided. The mobile station apparatus includes: a radio interface unit for connecting via radio with one of base station apparatuses; a storage unit which stores a list of second base station apparatuses each capable of adjusting radiowave transmit power thereof and potentially interfering with a radiowave arriving from a first base station apparatus connected via radio with the radio interface unit, wherein the list is acquired from the first base station apparatus; a radiowave quality measuring unit which measures quality of the radiowave received from the first base station; a transmit power level adjustment instructing unit which, if the quality of the radiowave received from the first base station has degraded to a predetermined level, then selects one of the second base station apparatuses from the list and creates a transmit power reduction request command for requesting the selected second base station apparatus to reduce the radiowave transmit power; and a transmission control unit which transmits the transmit power reduction request command to the selected second base station apparatus.

According to still another embodiment, a base station apparatus is provided. The base station apparatus includes: a storage unit; an interface unit for connecting with an upper node apparatus; a radio interface unit for connecting via radio with a mobile station apparatus located within a communication coverage area of the base station apparatus; and a base station information management unit which, when a command for requesting acquisition of a list of other base station apparatuses, each having a communication coverage area that overlaps at least a portion of the communication coverage area of the base station apparatus, is received from the mobile station apparatus connected via radio with the base station apparatus, transmits the list to the mobile station apparatus if the list is stored in the storage unit, but if the list is not stored in the storage unit, then acquires the list from the upper node apparatus and transmits the list to the mobile station apparatus.

According to yet another embodiment, an upper node apparatus is provided. The upper node apparatus is connected to a first base station apparatus having a first communication coverage area and also connected to at least one second base station apparatus having a second communication coverage area smaller than the first communication coverage area and capable of adjusting radiowave transmit power thereof. The upper node apparatus includes: a storage unit which stores information indicating the communication coverage area of the first base station apparatus; an interface unit which acquires, from the at least one second base station apparatus, installation location information indicating the installation location of the second base station apparatus; and a control unit which, based on the installation location information of each of the second base station apparatuses, identifies any second base station apparatus capable of transmitting a radiowave into the communication coverage area of the first base station apparatus, creates a list by including therein the identified second base station apparatus, and transmits the list to the first base station apparatus.

According to a further embodiment, a radiowave interference reducing method for use in a mobile communication system that includes a first base station apparatus having a first communication coverage area, at least one second base station apparatus having a second communication coverage area smaller than the first communication coverage area and capable of adjusting radiowave transmit power thereof, and a mobile station apparatus capable of connecting via radio to the first base station apparatus or to the at least one second base station apparatus is provided. In the radiowave interference reducing method, the mobile station apparatus is connected via radio to the first base station apparatus and measures the quality of a radiowave received from the first base station apparatus, and wherein if the quality of the received radiowave has degraded to a predetermined level, the mobile station apparatus selects one of the second base station apparatuses from a list of the second base station apparatuses, each having a communication coverage area that overlaps at least a portion of the communication coverage area of the first base station apparatus, and transmits a transmit power reduction request command to the selected second base station apparatus to request reducing the radiowave transmit power thereof. On the other hand, of the second base station apparatuses, the base station apparatus that received the transmit power reduction request command from the mobile station apparatus reduces the radiowave transmit power.

The object and advantages of the invention will be realized and attained by means of the elements and combinations particularly indicated in the claims.

It is to be understood that both the foregoing general description and the following detailed description are exemplary and explanatory and are not restrictive of the invention, as claimed.

### EFFECT OF THE INVENTION

The mobile communication system, mobile station apparatus, base station apparatus, and radiowave interference reducing method disclosed herein can reduce the radiowave interference occurring at the mobile station apparatus.

### BRIEF DESCRIPTION OF THE DRAWINGS

Figure 1 is a diagram schematically illustrating the configuration of a mobile communication system according to one embodiment.
Figure 2 is an operation sequence diagrams of a radiowave interference reduction process.
Figure 3 is an operation sequence diagrams of the radiowave interference reduction process.
Figure 4 is a diagram illustrating one example of a neighborhood base station list.
Figure 5 is a sequence diagram of a neighborhood base station list transmit process which a base station apparatus connected via radio to a mobile station apparatus experiencing radiowave interference performs when determining whether or not to transmit the neighborhood base station list to the mobile station apparatus.
Figure 6 is a diagram schematically illustrating the configuration of a macro base station apparatus.
Figure 7 is a functional block diagram of a control unit included in the macro base station apparatus.
Figure 8 is a diagram schematically illustrating the configuration of a femto base station apparatus.
Figure 9 is a functional block diagram of a control unit included in the femto base station apparatus.
Figure 10 is a diagram schematically illustrating the configuration of an upper node apparatus.
Figure 11 is a diagram schematically illustrating the configuration of a mobile station apparatus.
Figure 12 is a functional block diagram of a control unit included in the mobile station apparatus.

### DESCRIPTION OF EMBODIMENTS

A mobile communication system according to one embodiment will be described below with reference to the drawings.

In the mobile communication system, if interference occurs at a mobile station apparatus between the radiowaves arriving from a macro base station apparatus and the radiowaves arriving from a femto base station apparatus, the mobile station apparatus acquires a list of femto base station apparatuses located in the neighborhood of the macro base station apparatus. The mobile station apparatus transmits a radiowave transmit power reduce command to any one of the femto base station apparatuses carried in the list. On the other hand, the femto base station apparatus that received the command reduces its radiowave transmit power. After that, the mobile station apparatus checks whether the radiowave interference has actually been reduced. The mobile station apparatus improves the communication conditions at the mobile station apparatus by transmitting the radiowave transmit power reduce command to the listed femto base station apparatuses in sequence until the radiowave interference is reduced.

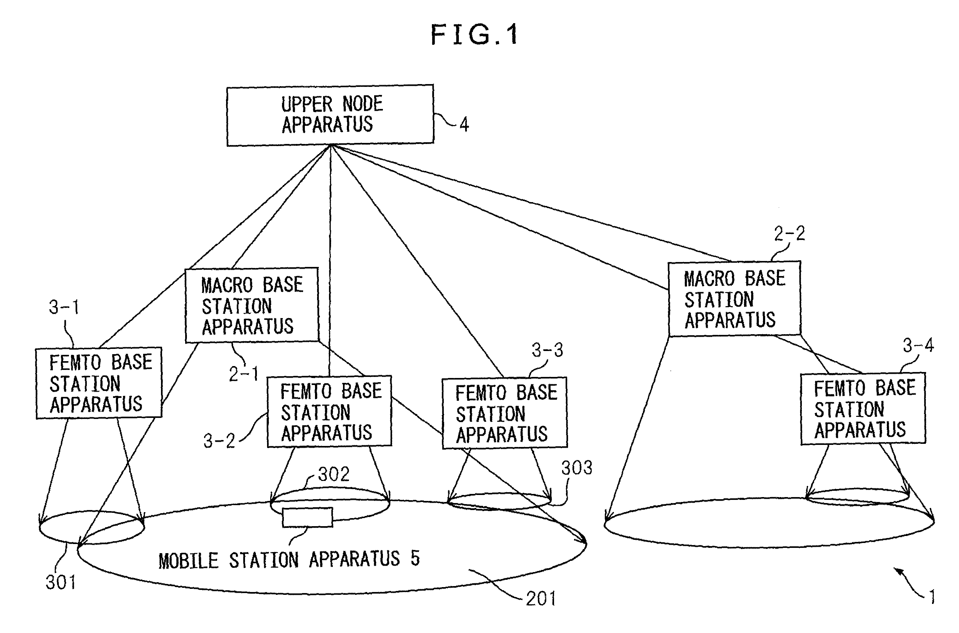

Figure 1 is a diagram schematically illustrating the configuration of the mobile communication system according to the one embodiment. The mobile communication system 1 includes one or more macro base station apparatuses 2-1 and 2-2, one or more femto base station apparatuses 3-1 to 3-4, an upper node apparatus 4, and at least one mobile station apparatus 5. Each base station apparatus is connected to the upper node apparatus 4 over a communication network. As an example, in Figure 1, the mobile communication system 1 includes two macro base station apparatuses. However, the number of macro base station apparatuses included in the mobile communication system 1 is not limited to two. Further, the number of femto base station apparatuses and the number of mobile station apparatuses included in the mobile communication system 1 are not limited to four and one, respectively.

The macro base station apparatuses 2-1 and 2-2 are apparatuses that relay communications between the mobile station apparatus 5 and the upper node apparatus 4. The macro base station apparatuses 2-1 and 2-2 each correspond, for example, to Evolved Universal Terrestrial Radio Access Network (E-UTRAN) NodeB (eNB) defined in the Long Term Evolution (LTE), a communication standard for which the Third Generation Partnership Project (3GPP) is proceeding with standardization work.

The femto base station apparatuses 3-1 to 3-4 are also apparatuses that relay communications between the mobile station apparatus 5 and the upper node apparatus 4. The femto base station apparatuses 3-1 to 3-4 also correspond to eNBs in the LTE.

The upper node apparatus 4 is an apparatus that relays communications between the mobile station apparatus 5 and a core network. The upper node apparatus 4 corresponds, for example, to Mobility Management Entity (MME) and/or Serving Gateway (S-GW) defined in the LTE.

When the mobile station apparatus 5 enters the communication coverage area of any one of the base station apparatuses, the mobile station apparatus 5 can communicate via radio with the base station apparatus serving that communication coverage area. When a radio link is established between the mobile station apparatus 5 and the serving base station apparatus, an uplink signal transmitted from the mobile station apparatus 5 is relayed via the base station apparatus on to the upper node apparatus 4. The upper node apparatus 4 performs routing and transmits the received uplink signal, for example, over the core network, to another upper node apparatus (not depicted). When a downlink signal from that other upper node apparatus is received over the core network, the upper node apparatus 4 transmits the received downlink signal to the mobile station apparatus 5 via the base station apparatus to which the mobile station apparatus 5 is linked via radio.

The macro base station apparatuses 2-1 and 2-2 have relatively wide communication coverage areas (for example, ranging from several hundred meters to a dozen or so kilometers in radius). On the other hand, the femto base station apparatuses 3-1 to 3-4 have communication coverage areas (for example, several tens of meters in radius) smaller than those of the macro base station apparatuses, and are installed, for example, in indoor or underground locations. The radiowave transmission range of the macro base station apparatus and the radiowave transmission range of the femto base station apparatus may overlap each other. For example, in Figure 1, the communication coverage area 201 of the macro base station apparatus 2-1 overlaps the communication coverage areas 301 to 303 of the respective femto base station apparatuses 3-1 to 3-3. Since the radiowave transmission range is generally wider than the communication coverage area, the radiowave transmission range of the macro base station apparatus 2-1 overlaps the radiowave transmission ranges of the respective femto base station apparatuses 3-1 to 3-3.

As a result, if the mobile station apparatus 5 is located within an area where the radiowave transmission range of the macro base station apparatus overlaps the radiowave transmission range of any one of the femto base station apparatuses, radiowave interference may occur at the mobile station apparatus 5.

When a degradation of the radiowave reception conditions caused by radiowave interference is detected, the mobile communication system 1 initiates a radiowave interference reduction process.

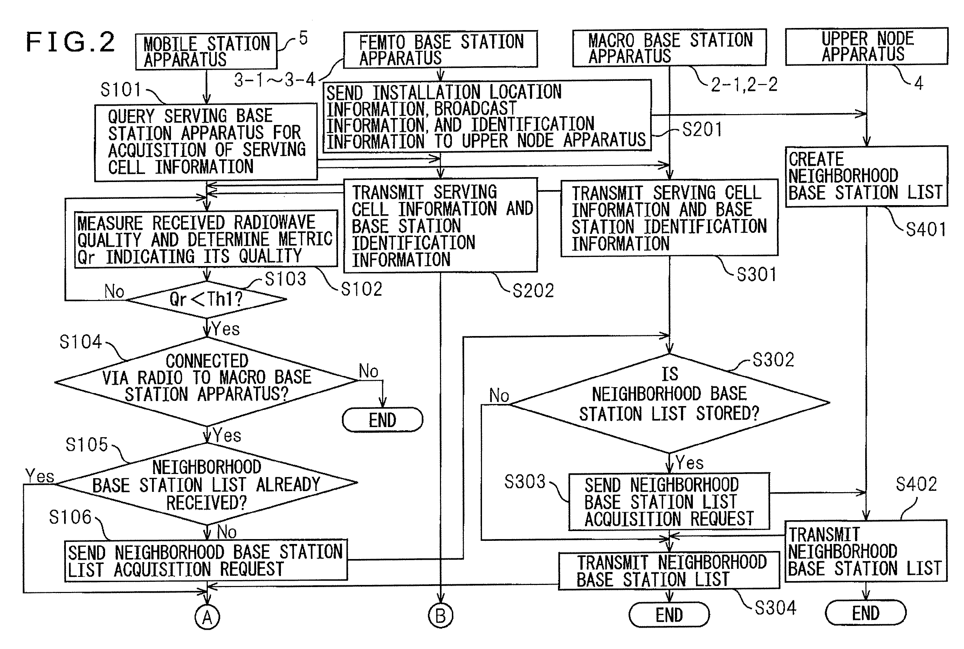

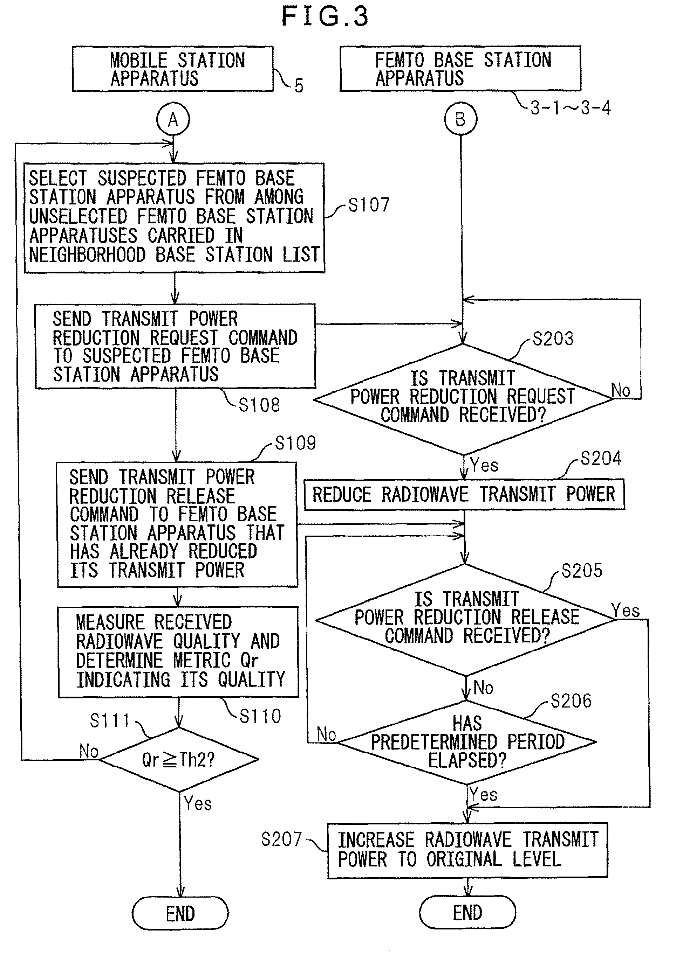

Figures 2 and 3 are operation sequence diagrams of the radiowave interference reduction process performed in the mobile communication system 1.

First, at power on, the femto base station apparatuses 3-1 to 3-4 each acquire installation location information indicating the location where the femto base station apparatus is installed. Then, the femto base station apparatuses 3-1 to 3-4 each send the installation location information to the upper node apparatus 4 together with the broadcast information and identification information of the femto base station apparatus (step S201).

Each time the installation location information is received from any one of the femto base station apparatuses 3-1 to 3-4, the upper node apparatus 4 creates or updates a neighborhood base station list which includes the femto base station apparatus concerned (step S401). The neighborhood base station list is a list of femto base stations radiating radiowaves that may interfere with the radiowaves arriving from the macro base station apparatus at the mobile station apparatus located within the communication coverage area of the macro base station apparatus. The upper node apparatus 4 stores the thus created neighborhood base station list in its internal storage unit by associating the list with the identification information of the corresponding macro base station apparatus.

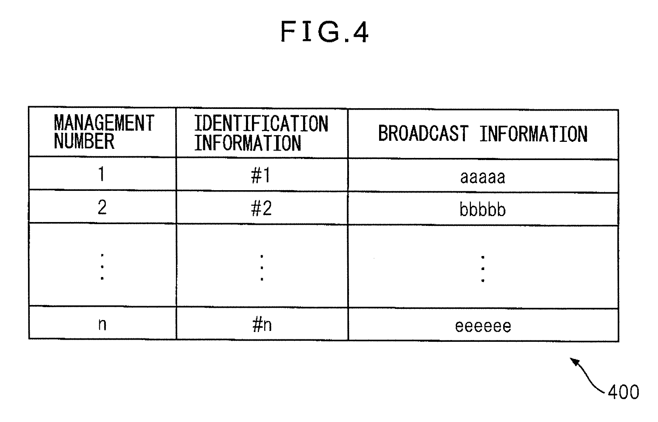

Figure 4 is a diagram illustrating one example of the neighborhood base station list. The neighborhood base station list 400 stores information for one femto base station apparatus in each row. The neighborhood base station list 400 carries the fields of management number, femto base station identification information, and femto base station broadcast information as illustrated in this order from left to right. Location information indicating the location of the femto base station apparatus is included in the broadcast information. For example, in Figure 1, the communication coverage area of the macro base station apparatus 2-1 overlaps the radiowave transmission ranges of the respective femto base station apparatuses 3-1 to 3-3. Therefore, the neighborhood base station list for the macro base station apparatus 2-1 carries information concerning the femto base station apparatuses 3-1 to 3-3.

Referring back to Figure 2, when performing location registration or handover, the mobile station apparatus 5 queries the serving base station apparatus for acquisition of serving cell information that indicates the type of the serving base station apparatus (step S101). The base station apparatus that received the query transmits the serving cell information to the mobile station apparatus 5 together with the identification information of the base station apparatus (step S202 or S301).

On the other hand, the mobile station apparatus 5 measures the received radiowave quality and obtains a metric Qr indicating the received radiowave quality (step S103). Then, the mobile station apparatus 5 determines whether the metric Qr is smaller than a predetermined threshold value Th1 (step S103). The predetermined threshold value Th1 here may be, for example, a metric value corresponding to the received radiowave quality of the lowest level at which the mobile station apparatus 5 can reproduce downlink control signals, or a value equal to the metric value corresponding to the received radiowave quality of the lowest level multiplied by a safety factor (for example, 1.1). Accordingly, if the metric Qr is not smaller than the threshold value Th1 (No in step S103), it is determined that the effect of radiowave interference on the received radiowave quality is small. Therefore, the mobile station apparatus 5 returns control to step S102 and repeats the step of measuring the received radiowave quality.

On the other hand, if the metric Qr is smaller than the threshold value Th1 (Yes in step S103), it is determined that the received radiowave quality has degraded due to radiowave interference. Then, by referring to the serving cell information, the mobile station apparatus 5 determines whether it is connected via radio to the macro base station apparatus (step S104).

If the mobile station apparatus 5 is connected via radio to one of the femto base station apparatuses 3-1 to 3-4 (No in step S104), it is very likely that the apparatus radiating the radiowaves interfering with the radiowaves from the serving femto base station apparatus is the macro base station apparatus 2-1 or 2-2. If the radiowave transmit power of the macro base station apparatus is reduced, the plurality of mobile station apparatuses located within the communication coverage area of that macro base station apparatus may become unable to communicate with that macro base station apparatus. Therefore, in this case, the mobile station apparatus 5 terminates the radiowave interference reduction process without sending a radiowave transmit power reduction request command to the base station apparatus.

On the other hand, if the mobile station apparatus 5 is connected via radio to the macro base station apparatus 2-1 or 2-2 (Yes in step S104), the mobile station apparatus 5 checks whether the neighborhood base station list applicable to that macro base station apparatus is held in the mobile station apparatus 5 (step S105). For example, if the neighborhood base station list associated with the identification information that matches the identification information included in the broadcast information acquired from the serving macro base station apparatus is stored in the mobile station apparatus 5, then it is determined that the neighborhood base station list applicable to that macro base station apparatus is held in the mobile station apparatus 5. The macro base station apparatus may transmit, in addition to the neighborhood base station list, information indicating the communication coverage area of the macro base station apparatus (for example, the installation location of the macro base station apparatus and the radius of the communication coverage area) to the mobile station apparatus 5. In this case, if the mobile station apparatus 5 is currently located within the communication coverage area of the macro base station apparatus indicated in the received information, it can be determined that the mobile station apparatus 5 has already received the neighborhood base station list applicable to that communication coverage area.

If the neighborhood base station list applicable to the serving macro base station apparatus is not yet received (No in step S105), the mobile station apparatus 5 transmits a neighborhood base station list acquisition request command to the serving macro base station apparatus (step S106).

The macro base station apparatus that received the neighborhood base station list acquisition request command checks to see if it holds the requested neighborhood base station list (step S302).

If the requested neighborhood base station list is not held in the macro base station apparatus (No in step S302), the macro base station apparatus sends, together with its identification information, the neighborhood base station list acquisition request command to the upper node apparatus 4 (step S303).

In response to the neighborhood base station list acquisition request command, the upper node apparatus 4 returns the neighborhood base station list associated with the identification information received together with the command to the macro base station apparatus that sent the neighborhood base station list acquisition request command (step S402).

After receiving the neighborhood base station list from the upper node apparatus 4, or after it is determined that the neighborhood base station list is held in the macro base station apparatus itself (Yes in step S302), the macro base station apparatus proceeds to transmit the neighborhood base station list to the requesting mobile station apparatus 5 (step S304).

As illustrated in Figure 3, the mobile station apparatus 5 that received the neighborhood base station list from the serving macro base station apparatus selects a suspected femto base station apparatus from among the unselected femto base station apparatuses carried in the neighborhood base station list (step S107). If the neighborhood base station list applicable to the serving macro base station apparatus has already been received (Yes in step S105), the mobile station apparatus 5 also proceeds to carry out the processing of step S107.

Then, the mobile station apparatus 5 sends a transmit power reduction request command to the suspected femto base station apparatus (step S108).

The femto base station apparatus checks to see if the transmit power reduction request command from the mobile station apparatus 5 is received (step S203). If the transmit power reduction request command is not received (No in step S203), the femto base station apparatus repeats the processing of step S203.

On the other hand, if the transmit power reduction request command is received (Yes in step S203), the femto base station apparatus reduces its radiowave transmit power by a predetermined level (step S204). The predetermined level by which to reduce the radiowave transmit power is determined theoretically or empirically so that the radiowave interference occurring at the mobile station apparatus due to the radiowaves radiated from the femto base station apparatus will be reduced, for example, to such a level that the mobile station apparatus can reproduce the received signal.

If there is any femto base station apparatus, other than the suspected femto base station apparatus, that has already reduced its radiowave transmit power in accordance with the transmit power reduction request command, the mobile station apparatus 5 sends a transmit power reduction release command to that femto base station apparatus (step S109).

After that, the mobile station apparatus 5 once again measures the received radiowave quality and obtains the metric Qr (step S110). Then, the mobile station apparatus 5 determines whether or not the metric Qr is equal to or larger than a threshold value Th2 (step S111). The threshold value Th2 is a value obtained by adding a prescribed offset value to the threshold value Th1. The prescribed offset value is a value determined so that the mobile station apparatus 5 can accurately determine that the received radiowave quality has improved; for example, it is preferable to determine the value by multiplying the threshold value Th1 by 0.1 to 0.2.

If the metric Qr is smaller than the threshold value Th2 (No in step S111), it is determined that the radiowave interference has not yet been reduced. Therefore, the mobile station apparatus 5 returns control to step S107 and repeats the process from S107 to S111.

On the other hand, if the metric Qr is equal to or larger than the threshold value Th2 (Yes in step S111), it is determined that the radiowave interference has been reduced. Therefore, the mobile station apparatus 5 terminates the radiowave interference reduction process. If, in step S107, there is no longer any femto base station apparatus remaining unselected in the neighborhood base station list, the interfering radiowaves are not the radiowaves radiating from the femto base station apparatuses. Therefore, in this case also, the mobile station apparatus 5 terminates the radiowave interference reduction process.

The femto base station apparatus checks to see if a transmit power reduction release command is received from the mobile station apparatus 5 (step S205).

If such a transmit power reduction release command is not received from the mobile station apparatus 5 (No in step S205), the femto base station apparatus determines whether a predetermined period has elapsed after reducing the transmit power (step S206). The predetermined period may be, for example, the period of time that is expected to elapse from the moment the user of the mobile station apparatus 5 enters the radiowave transmission range of the femto base station apparatus until the moment the user leaves the radiowave transmission range. For example, the predetermined period may be set to one minute, ten minutes, or one hour.

If the predetermined period has not yet elapsed after reducing the transmit power (No in step S206), the femto base station apparatus returns control to step S205.

On the other hand, if the transmit power reduction release command is received (Yes in step S205), the femto base station apparatus increases its radiowave transmit power to the original level (step S207). Further, if the predetermined period has elapsed after reducing the transmit power (Yes in step S206), the femto base station apparatus also increases its radiowave transmit power to the original level.

After that, the interfering femto base station apparatus terminates the radiowave interference reduction process.

Alternatively, when the base station apparatus connected via radio to the mobile station apparatus experiencing the radiowave interference is notified by the mobile station apparatus of the occurrence of the radiowave interference, the base station apparatus may transmit the neighborhood base station list to that mobile station apparatus. In this case, the mobile station apparatus need not acquire the serving cell information from the base station apparatus.

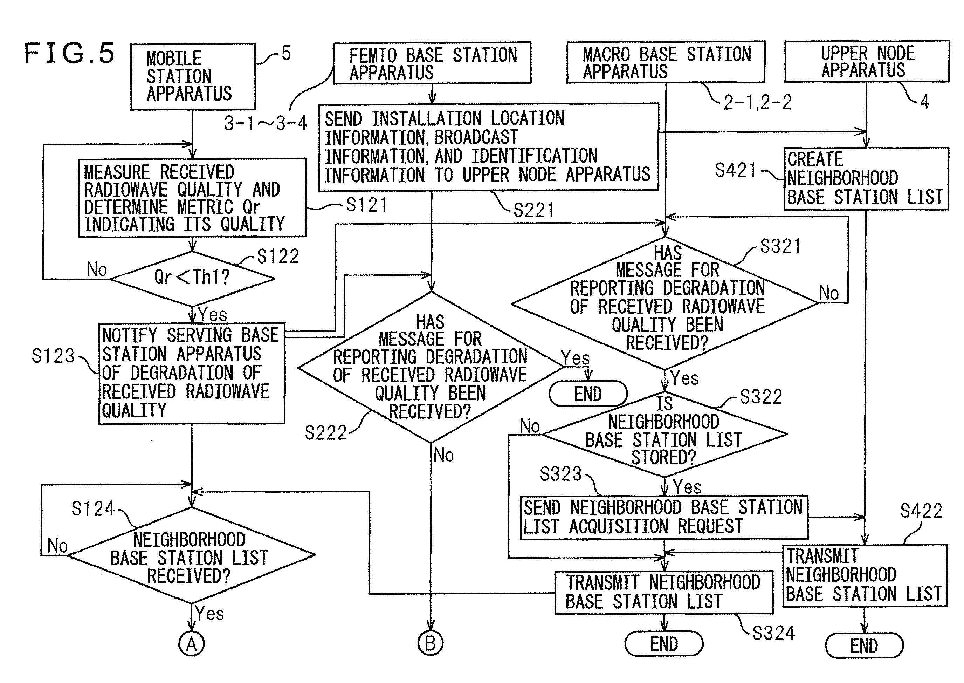

Figure 5 is a sequence diagram of a neighborhood base station list transmit process which the base station apparatus connected via radio to the mobile station apparatus experiencing the radiowave interference performs when determining whether or not to transmit the neighborhood base station list to the mobile station apparatus.

First, as in the sequence depicted in Figure 2, the femto base station apparatuses 3-1 to 3-4 each acquire installation location information at power on. Then, the femto base station apparatuses 3-1 to 3-4 each send the installation location information to the upper node apparatus 4 together with its broadcast information and identification information (step S221).

Each time the installation location information is received from any one of the femto base station apparatuses 3-1 to 3-4, the upper node apparatus 4 creates or updates a neighborhood base station list which includes the femto base station apparatus concerned (step S421).

On the other hand, the mobile station apparatus 5 connected via radio to any one of the base station apparatuses measures the received radiowave quality and obtains the metric Qr indicating the received radiowave quality (step S121). Then, the mobile station apparatus 5 determines whether the metric Qr is smaller than the threshold value Th1 (step S122). If the metric Qr is not smaller than the threshold value Th1 (No in step S122), it is determined that the effect of the radiowave interference on the received radiowave quality is small. Therefore, the mobile station apparatus 5 returns control to step S121 and repeats the step of measuring the received radiowave quality.

On the other hand, if the metric Qr is smaller than the threshold value Th1 (Yes in step S122), it is determined that the received radiowave quality has degraded due to the radiowave interference. The mobile station apparatus 5 then notifies its serving base station apparatus that the received radiowave quality has degraded (step S123). The mobile station apparatus 5 may use, for example, Measurement Report, one of Radio Resource Control (RRC) messages, as a message for reporting the degradation of the received radiowave quality.

Each base station apparatus checks to see if it has received the message for reporting the degradation of the received radiowave quality (step S222 or S321). If any one of the femto base station apparatuses 3-1 to 3-4 has received the message for reporting the degradation of the received radiowave quality (Yes in step S222 and No in step S321), the base station apparatus connected via radio to the mobile station apparatus experiencing the radiowave interference is the femto base station apparatus. In this case, it is very likely that the apparatus radiating the radiowaves interfering at the mobile station apparatus 5 with the radiowaves from the femto base station apparatus is the macro base station apparatus. If the radiowave transmit power of the macro base station apparatus is reduced here, the plurality of mobile station apparatuses located within the communication coverage area of that macro base station apparatus may not be able to communicate with that macro base station apparatus. Therefore, in this case, it is preferable for the mobile station apparatus 5 not to request the macro base station apparatus to reduce its transmit power. The mobile station apparatus 5 therefore does not need to acquire the neighborhood base station list. As a result, the femto base station apparatus terminates the neighborhood base station list transmit process without further doing anything. Alternatively, the femto base station apparatus may notify the mobile station apparatus 5 that the neighborhood base station list will not be transmitted.

On the other hand, if either one of the macro base station apparatuses 2-1 and 2-2 has received the message for reporting the degradation of the received radiowave quality (No in step S222 and Yes in step S321), the base station apparatus connected via radio to the mobile station apparatus experiencing the radiowave interference is the macro base station apparatus. In this case, it is very likely that the apparatus radiating the radiowaves interfering at the mobile station apparatus 5 with the radiowaves from the macro base station apparatus is one of the femto base station apparatuses. If a request to reduce the radiowave transmit power is made to the femto base station apparatus suspected of radiating the interfering radiowaves, the received radiowave quality at the mobile station apparatus 5 may improve. The mobile station apparatus 5 therefore needs to acquire the neighborhood base station list in order to identify the femto base station apparatus suspected of radiating the interfering radiowaves. Accordingly, the macro base station apparatus connected via radio to the mobile station apparatus 5 transmits the neighborhood base station list to the mobile station apparatus 5.

More specifically, the macro base station apparatus checks to see if it holds the neighborhood base station list (step S322).

If the neighborhood base station list is not held in the macro base station apparatus (No in step S322), the macro base station apparatus sends, together with its identification information, a neighborhood base station list acquisition request command to the upper node apparatus 4 (step S323).

In response to the neighborhood base station list acquisition request command, the upper node apparatus 4 sends the neighborhood base station list associated with the identification information received together with the acquisition request to the macro base station apparatus that sent the neighborhood base station list acquisition request command (step S422).

After receiving the neighborhood base station list from the upper node apparatus 4, or after it is determined that the neighborhood base station list is held in the macro base station apparatus (Yes in step S322), the macro base station apparatus proceeds to transmit the neighborhood base station list to the mobile station apparatus 5 (step S324).

The mobile station apparatus 5 determines whether the neighborhood base station list has been received (step S124). If the neighborhood base station list has not yet been received (No in step S124), the mobile station apparatus 5 repeats the processing of step S124.

On the other hand, if the neighborhood base station list has been received (Yes in step S124), the mobile station apparatus 5 terminates the neighborhood base station list transmit process.

After step S124, the mobile station apparatus 5 proceeds to perform the process starting from step S107 depicted in Figure 3 and thereby tries to reduce the radiowave interference. At the same time, the femto base station apparatuses carried in the neighborhood base station list proceed to perform the process starting from step S203.

The mobile station apparatus may perform the process depicted in Figures 5 and 3 each time location registration is made or each time handover is processed.

The configuration of each component element of the mobile communication system 1 for implementing the above process will be described in detail below.

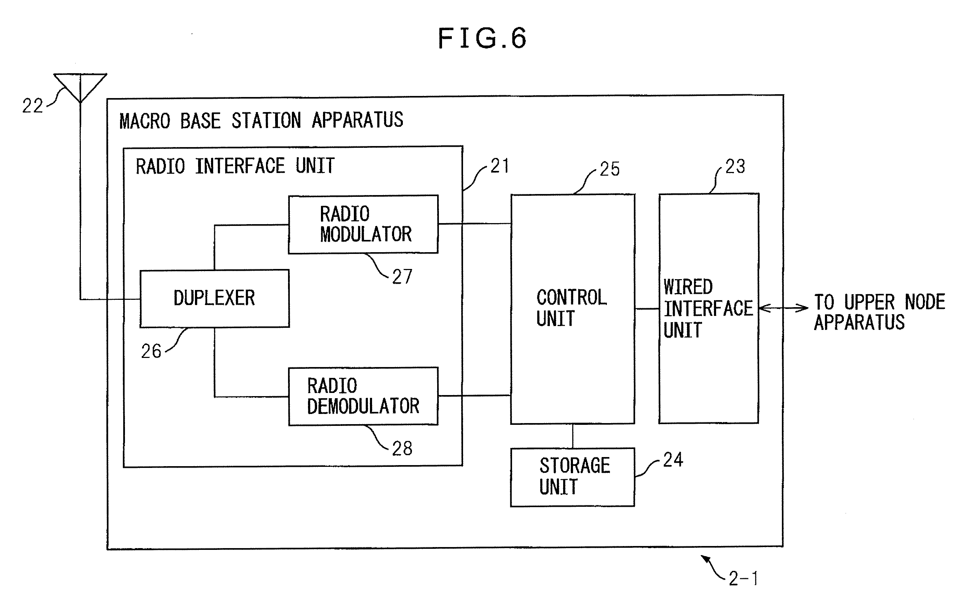

Figure 6 is a diagram schematically illustrating the configuration of the macro base station apparatus 2-1. Since the macro base station apparatuses are identical in function and configuration, the following description deals only with one macro base station apparatus.

The macro base station apparatus 2-1 includes a radio interface unit 21, an antenna 22, a wired interface unit 23, a storage unit 24, and a control unit 25. The radio interface unit 21 includes a duplexer 26, a radio modulator 27, and a radio demodulator 28. The radio interface unit 21, the storage unit 24, and the control unit 25 may be implemented as separate circuits. Alternatively, these units may be mounted on the macro base station apparatus 2-1 by implementing them in the form of a single integrated circuit on which the circuits corresponding to the respective units are integrated.

The radio modulator 27 in the radio interface unit 21 receives from the control unit 25 various kinds of control signals and the downlink signal encoded for transmission, and multiplexes these signals in accordance with a prescribed multiplexing scheme. The prescribed multiplexing scheme is, for example, an orthogonal frequency-division multiplexing (OFDM) scheme. The radio modulator 27 superimposes the multiplexed downlink signal and control signals onto a carrier having a radio frequency. Then, the radio modulator 27 amplifies the downlink signal and control signals, each superimposed on the carrier, to a desired level by a high-power amplifier (not depicted), and passes them via the duplexer 26 to the antenna 22.

On the other hand, the uplink signal and control signals received by the antenna 22 are passed via the duplexer 23 to the radio demodulator 28 in the radio interface unit 21 and are amplified by a low-noise amplifier (not depicted). The radio demodulator 28 multiplies the thus amplified uplink signal and control signals by a periodic signal having an intermediate frequency and thereby converts the frequency of the uplink signal and control signals from the radio frequency to the baseband frequency. Then, the radio demodulator 28 demultiplexes the uplink signal in accordance with a prescribed multiplexing scheme. The radio demodulator 28 then passes the demultiplexed uplink signal and control signals to the control unit 25. A single carrier frequency division multiplexing (SC-FDMA) scheme, for example, may be employed as the multiplexing scheme for the uplink signal.

The downlink signal or control signals passed from the radio modulator 27 via the duplexer 26 are radiated from the antenna 22.

On the other hand, the uplink signal or various kinds of control signals transmitted from the mobile station terminal 5 are received by the antenna 22 and passed via the duplexer 26 to the radio demodulator 28.

The wired interface unit 23 includes a communication interface for connecting with the upper node apparatus 4. The wired interface unit 23 receives the downlink signal or control signals from the upper node apparatus 4 and passes the downlink signal or control signals to the control unit 25. Further, the wired interface unit 23 receives the uplink signal or control signals from the control unit 25 and transmits the uplink signal or control signals to the upper node apparatus 4.

The storage unit 24 includes, for example, an alterable nonvolatile semiconductor memory. The storage unit 24 stores various kinds of information, such as identification information of the macro base station apparatus 5 and the frequencies used, that are used for controlling the radio connection with the mobile station terminal 5. The storage unit 24 may also be used to temporarily store the uplink signal or the downlink signal.

The storage unit 24 further stores the serving cell information, the information concerning the installation location of the macro base station apparatus 5, the radius of the communication coverage area, and the neighborhood base station list received from the upper node apparatus 4.

The control unit 25 includes, for example, one or a plurality of processors and their peripheral circuitry.

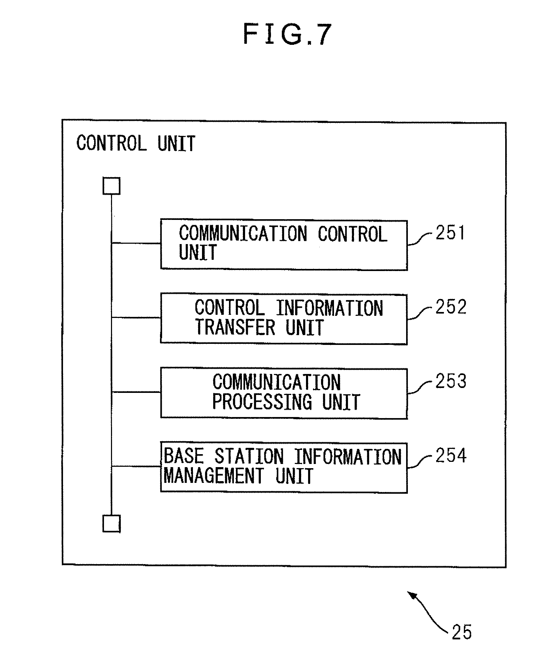

Figure 7 is a functional block diagram of the control unit 25. The control unit 25 includes a communication control unit 251, a control information transfer unit 252, a communication processing unit 253, and a base station information management unit 254.

The communication control unit 251 includes the functions of Radio Resource Control (RRC) and Radio Resource Management (RRM). Then, in accordance with a prescribed call control protocol, the communication control unit 251 performs processing, such as call control and handover, for the mobile station apparatus 5 entering the communication coverage area of the macro base station apparatus 2-1 in order to establish a radio connection between the macro base station apparatus 2-1 and the mobile station apparatus 5.

When an inquiry about the type of the base station apparatus is received from the mobile station apparatus 5 radio-linked to it, the communication control unit 251 creates, in response to the inquiry, serving cell information which includes the type and identification information of the base station apparatus. The communication control unit 251 may create the serving cell information by also including therein information indicating the communication coverage area of the macro base station apparatus 2-1. The communication control unit 251 passes the serving cell information to the radio modulator 27 for transmission to the inquiring mobile station apparatus.

Further, when the neighborhood base station list is received from the base station information management unit 254, the communication control unit 251 creates a control signal containing the neighborhood base station list and addressed to the mobile station apparatus radio-linked to it. The communication control unit 251 may create the control signal by including therein not only the neighborhood base station list but also the information indicating the communication coverage area of the macro base station apparatus (for example, the installation location of the macro base station apparatus and the radius of the communication coverage area). The communication control unit 251 passes the control signal to the radio modulator 27.

The communication control unit 251 may further include the functions of Radio Link Control (RLC) and Media Access Control (MAC). Then, the communication control unit 251 may perform processing, such as retransmission control and reordering, for transmission and reception of signals to and from the mobile station apparatus 5.

The control information transfer unit 252 creates a control command such as a connection request, setup request, etc., and transmits the control command to the upper node apparatus 4 via the wired interface unit 23. Further, the control information transfer unit 252 receives a control command such as a setup response from the upper node apparatus 4 via the wired interface unit 23.

The communication processing unit 253 applies transmission processing such as error-correction coding to the downlink signal transferred from the wired interface unit 23 for transmission to the mobile station terminal 5. The communication processing unit 253 then passes the thus encoded downlink signal to the radio modulator 27. Further, the communication processing unit 253 receives the uplink signal transmitted from the mobile station apparatus 5 and demodulated by the radio demodulator 28, and applies reception processing such as error-correction decoding to the received signal. The communication processing unit 253 passes the decoded uplink signal to the wired interface unit 23.

The base station information management unit 254 manages the neighborhood base station list.

More specifically, when a neighborhood base station list acquisition request is received from the mobile station apparatus 5, if the neighborhood base station list is stored in the storage unit 24, the base station information management unit 254 retrieves the neighborhood base station list from the storage unit 24. On the other hand, if the neighborhood base station list is not stored in the storage unit 24, the base station information management unit 254 instructs the control information transfer unit 252 to transfer the neighborhood base station list acquisition request command to the upper node apparatus 4. At this time, the base station information management unit 254 appends the identification information of the macro base station apparatus 2-1 to the neighborhood base station list acquisition request command. Then, when the neighborhood base station list is retrieved by the control information transfer unit 252 from the control information received from the upper node apparatus 4, the base station information management unit 254 stores the neighborhood base station list in the storage unit 24. Then, the base station information management unit 254 passes the neighborhood base station list to the communication control unit 251 for transmission to the mobile station apparatus radio-linked to it.

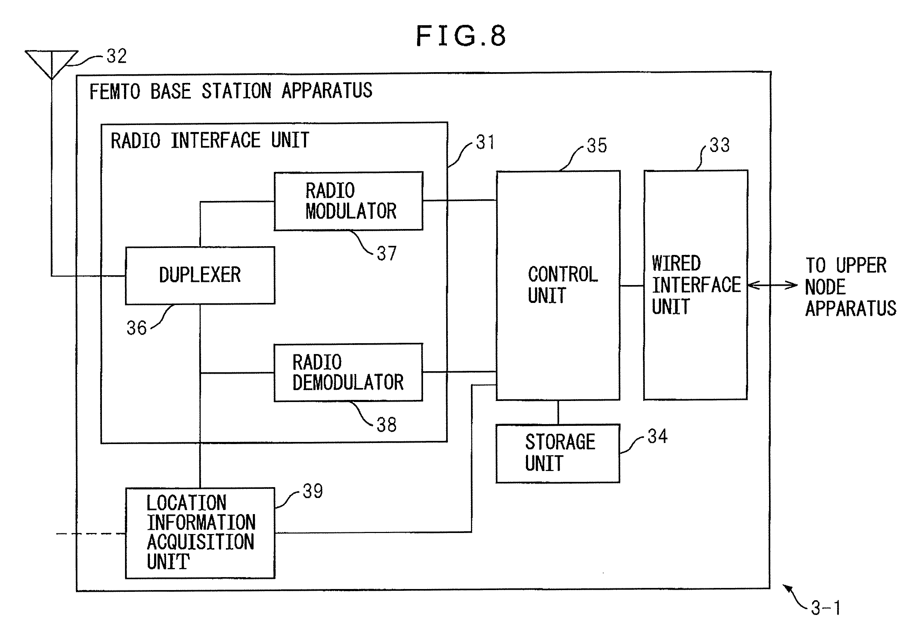

Figure 8 is a diagram schematically illustrating the configuration of the femto base station apparatus 3-1. Since the femto base station apparatuses are identical in function and configuration, the following description deals only with one femto base station apparatus.

The femto base station apparatus 3-1 includes a radio interface unit 31, an antenna 32, a wired interface unit 33, a storage unit 34, a control unit 35, and a location information acquiring unit 39. The radio interface unit 31 includes a duplexer 36, a radio modulator 37, and a radio demodulator 38. The radio interface unit 31, the storage unit 34, the control unit 35, and the location information acquiring unit 39 may be implemented as separate circuits. Alternatively, these units may be mounted on the femto base station apparatus 3-1 by implementing them in the form of a single integrated circuit on which the circuits corresponding to the respective units are integrated. The radio interface unit 31, the antenna 32, and the wired interface unit 33 are identical in function to the radio interface unit 21, the antenna 22, and the wired interface unit 23 in the macro base station apparatus 2-1 of Figure 6, respectively. Therefore, the radio interface unit 31, the antenna 32, and the wired interface unit 33 will not be further described herein.

The storage unit 34 includes, for example, an alterable nonvolatile semiconductor memory. The storage unit 34 stores various kinds of information, such as the broadcast information and identification information of the femto base station apparatus 3-1, that are used for controlling the radio connection with the mobile station terminal 5. The storage unit 34 may also be used to temporarily store the uplink signal or the downlink signal.

The storage unit 34 further stores the installation location information of the femto base station apparatus 3-1 acquired through the location information acquiring unit 39.

The location information acquiring unit 39 acquires the installation location information indicating the location where the femto base station apparatus 3-1 is installed. For this purpose, the location information acquiring unit 39 acquires, for example, GPS (Global Positioning System) signals via the antenna 32. Then, the location information acquiring unit 39 acquires the installation location information by computing, based on the GPS signals, the latitude and longitude of the installation location of the femto base station apparatus 3-1.

Alternatively, the location information acquiring unit 39 may include a communication interface circuit conforming, for example, to a short-range communication standard such as Universal Serial Bus (USB). In this case, the location information acquiring unit 39 may be connected via the communication interface circuit to a device capable of measuring the position, and the current location information acquired through that device may be used as the installation location information.

The location information acquiring unit 39 passes the thus acquired location information to the control unit 35.

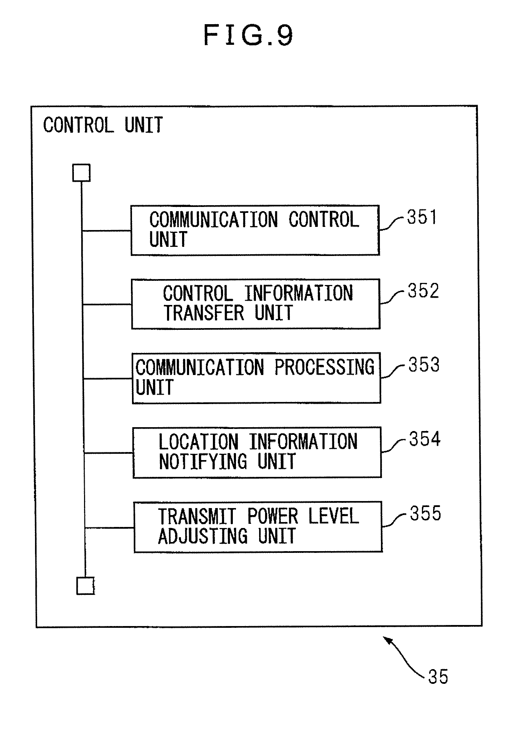

Figure 9 is a functional block diagram of the control unit 35. The control unit 35 includes a communication control unit 351, a control information transfer unit 352, a communication processing unit 353, a location information notifying unit 354, and a transmit power level adjusting unit 355. Of these units, the communication control unit 351, the control information transfer unit 352, and the communication processing unit 353 are identical in function to the communication control unit 251, the control information transfer unit 252, and the communication processing unit 253, respectively, in the control unit 25 of the macro base station apparatus 2-1 depicted in Figure 6. Therefore, the following description focuses on the location information notifying unit 354 and the transmit power level adjusting unit 355.

Each time the installation location information of the femto base station apparatus 3-1 is acquired through the location information acquiring unit 39, the location information notifying unit 354 passes the installation location information and the identification information of the femto base station apparatus 3-1 to the communication control unit 351 for transmission to the upper node apparatus 4. The communication control unit 351 creates a control signal containing the installation location information and identification information of the femto base station apparatus 3-1, and transmits the control signal via the wired interface unit 33 to the upper node apparatus 4. Alternatively, when a location information acquisition request is received from the upper node apparatus 4, the location information notifying unit 354 may transmit via the communication control unit 354 the location information and the identification information and installation location information of the femto base station apparatus 3-1 to the upper node apparatus 4.

When a transmit power reduction request command is received from the mobile station apparatus 5, the transmit power level adjusting unit 355 instructs the radio modulator 37 to reduce the transmit power of radiowaves, including the downlink signal and control signals to be radiated from the antenna 32, by a predetermined level.

In the meantime, the transmit power level adjusting unit 355 measures the time elapsed from the beginning of the transmit power reduction control by using a timer (not depicted) incorporated in the control unit 35. Then, when the elapsed time has reached a predetermined time, the transmit power level adjusting unit 355 instructs the radio modulator 37 to set the transmit power back to its original level.

Further, when a transmit power reduction release command is received from the mobile station apparatus 5, the transmit power level adjusting unit 355 also instructs the radio modulator 37 to set the transmit power back to its original level.

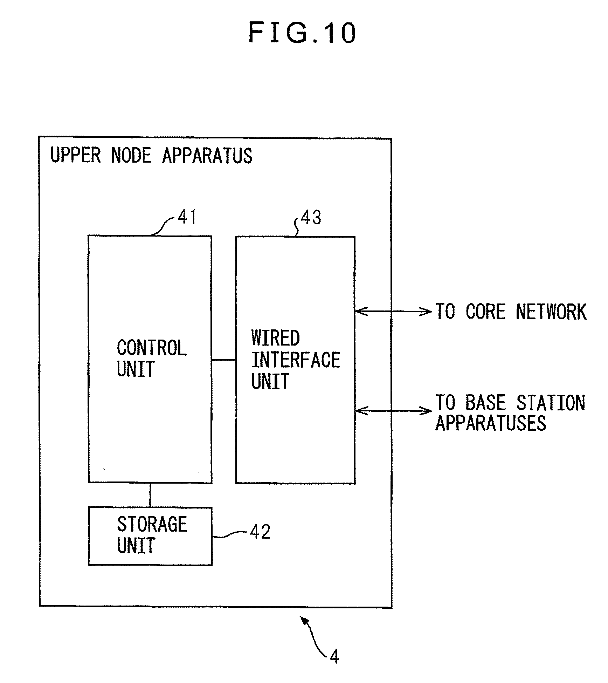

Figure 10 is a diagram schematically illustrating the configuration of the upper node apparatus 4. The upper node apparatus 4 includes a control unit 41, a storage unit 42, and a wired interface unit 43.

The control unit 41 includes, for example, one or a plurality of processors and their peripheral circuitry. The control unit 41 has the function of supervising the location and condition of each mobile station apparatus located within the communication coverage area served by any one of the base station apparatuses connected to the upper node apparatus 4.

Further, the control unit 41 performs routing for the signal received from the communicating mobile station apparatus 5. For example, the control unit 41 passes the uplink signal, received from the communicating mobile station apparatus 5, to the wired interface unit 43 which then transmits out the signal on the core network. On the other hand, when a downlink signal addressed to the communicating mobile station apparatus 5 is received from the core network via the wired interface unit 43, the control unit 41 transmits the downlink signal via the wired interface unit 43 to the base station apparatus to which the mobile station apparatus is linked via radio.

Further, if the neighborhood base station list for any one of the macro base station apparatuses 2-1 and 2-2 connected to the upper node apparatus 4 is not stored in the storage unit 42, the control unit 41 creates the neighborhood base station list for that macro base station apparatus. For this purpose, the control unit 41 requests the femto base station apparatuses 3-1 to 3-4 to transmit their installation location information, identification information, and broadcast information. When the installation location information, identification information, and broadcast information are received from each femto base station apparatus, the control unit 41 creates the neighborhood base station list for the macro base station apparatus concerned.

For example, the control unit 41 identifies the communication coverage area of the macro base station apparatus concerned. For this purpose, the installation location and the radius of the communication coverage area of each macro base station apparatus connected to the upper node apparatus 4 are stored in advance in the storage unit 42, and the control unit 41 accesses the storage unit 42 to retrieve the installation location and the radius of the communication coverage area as needed. Further, for each femto base station apparatus, the control unit 41 identifies from the installation location information of the femto base station apparatus a circular radiowave transmission range having a radius equivalent to an achievable radiowave transmission distance as measured from the installation location of the femto base station apparatus. The achievable radiowave transmission distance here is set, for example, equal to the maximum value of the range within which radiowaves strong enough to cause radiowave interference can be received at the mobile station apparatus when the femto base station apparatus radiates radiowaves at its maximum power. Alternatively, the achievable radiowave transmission distance may be determined by multiplying the radius of the communication coverage area of the femto base station apparatus by a safety factor of about 1 to 1.5. Then, the control unit 41 detects any femto base station apparatus having a radiowave transmission range that overlaps the communication coverage area of the macro base station concerned.

The control unit 41 creates the neighborhood base station list for the macro base station apparatus concerned so as to include all of the detected femto base station apparatuses. Then, the control unit 41 stores the created neighborhood base station list in the storage unit 42 by associating the list with the identification information of the macro base station apparatus concerned.

Each time the installation location information is received from any one of the femto base station apparatuses 3-1 to 3-4, the control unit 41 updates, based on the installation location information, the neighborhood base station list for the macro base station apparatus associated with it. More specifically, the control unit 41 identifies the radiowave transmission range of the femto base station apparatus that transmitted the installation location information. Then, the control unit 41 detects the macro base station apparatus whose communication coverage area overlaps the radiowave transmission range of the femto base station apparatus. The control unit 41 adds the information concerning the femto base station apparatus that transmitted the installation location information, to the neighborhood base station list for the detected macro base station apparatus.

When a neighborhood base station list acquisition request is received from any one of the macro base station apparatuses, the control unit 41 retrieves, from among the neighborhood base station lists stored in the storage unit 42, the list associated with the macro base station apparatus that transmitted the neighborhood base station list acquisition request. Then, the control unit 41 transmits the neighborhood base station list via the wired interface 43 to the macro base station apparatus that transmitted the neighborhood base station list acquisition request.

The storage unit 42 includes, for example, an alterable nonvolatile semiconductor memory. The storage unit 42 stores various kinds of information used to perform control to communicate with the mobile station apparatus radio-linked to any one of the base station apparatuses connected to the upper node apparatus 4. Further, for each macro base station apparatus connected to the upper node apparatus 4, the storage unit 42 stores the neighborhood base station list along with its associated macro base station identification information.

The wired interface unit 43 includes a communication interface for connecting the upper node apparatus 4 to the core network or to any one of the base station apparatuses. The wired interface unit 43 receives from the core network the downlink signal addressed to the mobile station apparatus radio-linked to any one of the base station apparatuses connected to the upper node apparatus 4, and passes the downlink signal to the control unit 41. Further, when the downlink signal is received from the control unit 41, the wired interface unit 43 transmits the downlink signal to the base station apparatus to which the destination mobile station apparatus of the downlink signal is linked via radio. On the other hand, when an uplink signal is received from any one of the base station apparatuses, the wired interface unit 43 passes the uplink signal to the control unit 41. Further, when the uplink signal is received from the control unit 43, the wired interface unit 43 transmits out the uplink signal on the core network.

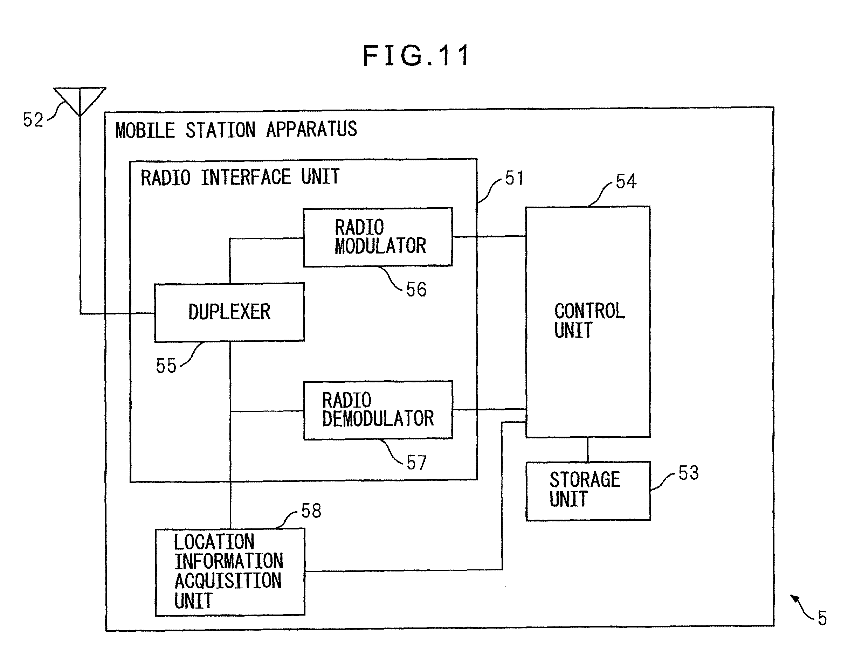

Figure 11 is a diagram schematically illustrating the configuration of the mobile station apparatus 5. The mobile station apparatus 5 includes a radio interface unit 51, an antenna 52, a storage unit 53, a control unit 54, and a location information acquiring unit 58. The radio interface unit 51 includes a duplexer 55, a radio modulator 56, and a radio demodulator 57. The radio interface unit 51, the storage unit 53, the control unit 54, and the location information acquiring unit 58 may be implemented as separate circuits. Alternatively, these units may be mounted on the mobile station apparatus 5 by implementing them in the form of a single integrated circuit on which the circuits corresponding to the respective units are integrated.

The radio interface unit 51 and antenna 52 depicted here are identical in function and configuration to the radio interface unit 21 and antenna 22 of the macro base station apparatus 2-1 depicted in Figure 8, except for the multiplexing scheme employed. Therefore, a detailed description of the radio interface unit 51 and antenna 52 is not provided.

The radio modulator 56 in the radio interface unit 51 multiplexes the uplink signal by using, for example, an SC-FDMA scheme. On the other hand, the radio demodulator 57 demultiplexes the multiplexed downlink signal by using, for example, an OFDMA scheme.

The location information acquiring unit 58 measures the current location of the mobile station apparatus 5.

For this purpose, the location information acquiring unit 58 acquires, for example, GPS signals via the antenna 52. Then, based on the GPS signals, the location information acquiring unit 58 computes the latitude and longitude of the current location of the mobile station apparatus 5. Alternatively, the location information acquiring unit 58 may determine the current location of the mobile station apparatus 5 by taking measurements of synchronization signals from the base station apparatuses by using a method called Advanced Forward Link Trilateration (AFLT).

The location information acquiring unit 58 passes the measured values of the current location of the mobile station apparatus 5 to the control unit 54.

The storage unit 53 includes, for example, an alterable nonvolatile semiconductor memory. The storage unit 53 stores various kinds of information used to perform control to communicate with the base station apparatus. The storage unit 53 also stores the serving cell information indicating the type of the base station apparatus connected via radio to the mobile station apparatus 5 and its identification information. The storage unit 53 further stores the neighborhood base station list and the identification information of the associated base station apparatus.

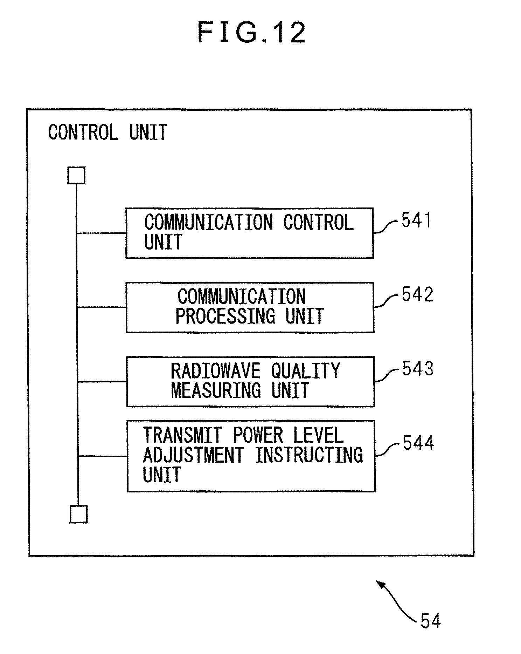

Figure 12 is a functional block diagram of the control unit 54. The control unit 54 includes a communication control unit 541, a communication processing unit 542, a radiowave quality measuring unit 543, and a transmit power level adjustment instructing unit 544.

The communication control unit 541 includes the functions of Radio Resource Control (RRC) and Radio Resource Management (RRM). The communication control unit 541 performs processing, such as location registration, call control, and handover, for establishing a radio connection between the mobile station apparatus 5 and the base station apparatus. For this purpose, the communication control unit 541 generates a control signal used for establishing a radio connection between the mobile station apparatus 5 and the base station apparatus, and passes the control signal to the radio modulator 56. Further, the communication control unit 541 performs processing in accordance with a control signal received from any one of the base station apparatuses.

At the time of location registration or handover, the communication control unit 541 queries the base station apparatus connected via radio to the mobile station apparatus 5 whether it is a macro base station or a femto base station. Then, the communication control unit 541 detects, from the response signal returned from the queried base station apparatus, the serving cell information indicating the type of the base station apparatus, i.e., whether it is a macro base station or a femto base station, and the identification information of the base station apparatus. The communication control unit 541 stores the serving cell information in the storage unit 53 by associating the information with the identification information of the corresponding base station apparatus.

When a command for adjusting the transmit power level of a designated one of the femto base station apparatuses is received from the transmit power level adjustment instructing unit 544, the communication control unit 541 creates a control signal that carries the command and that can be received by the femto base station apparatus. Such a control signal can be created by appending, for example, information indicating the type of the transmit power level adjust command and the identification information of the designated femto base station apparatus to an RRC location registration command. The communication control unit 541 transmits the control signal containing such commands to the designated femto base station apparatus via the radio modulator 56.

If the neighborhood base station list for the macro base station apparatus connected via radio to the mobile station apparatus 5 is not stored in the storage unit 53, the communication control unit 541 creates a command for requesting acquisition of the neighborhood base station list from that macro base station apparatus. The communication control unit 541 transmits the acquisition request command to the macro base station apparatus. When the neighborhood base station list is received from the macro base station apparatus together with the identification information of the macro base station apparatus, the communication control unit 541 stores the neighborhood base station list in the storage unit 53 by associating the list with the identification information of the corresponding base station apparatus.

The communication processing unit 542 applies transmission processing, such as information source coding and error-correction coding, to the uplink signal which carries a voice signal or data signal acquired via a microphone (not depicted) or via a user interface such as a keypad (not depicted). The communication processing unit 542 passes the thus encoded uplink signal to the radio modulator 56. Further, the communication processing unit 542 receives the downlink signal transmitted via radio from the serving base station apparatus and demodulated by the radio demodulator 28, and applies reception processing, such as error-correction decoding and information source decoding, to the received signal. Then, the communication processing unit 542 recovers the voice signal or data signal from the decoded downlink signal. The control unit 54 reproduces the recovered voice signal through a speaker (not depicted) or displays the data signal on a display (not depicted).

The radiowave quality measuring unit 543 measures the received radiowave quality. For example, the radiowave quality measuring unit 543 computes the metric Qr indicating the received radiowave quality by measuring the signal-to-interference power ratio (SIR) based on the strength of the received downlink pilot signal. Alternatively, the radiowave quality measuring unit 543 may compute the metric Qr by measuring the carrier-to-interference power ratio (CIR) rather than the SIR.

The radiowave quality measuring unit 543 measures the received radiowave quality constantly or periodically at predetermined intervals of time (for example, at 10-msec to 1-sec intervals). Each time the received radiowave quality is measured, the radiowave quality measuring unit 543 reports the metric Qr to the transmit power level adjustment instructing unit 544.

Each time the metric Qr indicating the received radiowave quality is received, the transmit power level adjustment instructing unit 544 compares the metric Qr with the predetermined threshold value Th1. If the metric Qr is smaller than the predetermined threshold value Th1, it is determined that the received radiowave quality has degraded.

If it is determined that the received radiowave quality has degraded, the transmit power level adjustment instructing unit 544 selects one of the femto base station apparatuses carried in the neighborhood base station list stored in the storage unit 53. Then, the transmit power level adjustment instructing unit 544 passes to the communication control unit 541 the identification information of the selected femto base station apparatus and the transmit power reduction request command for instructing the femto base station apparatus to reduce its transmit power level.

The transmit power level adjustment instructing unit 544 may select the femto base station apparatus in various ways. For example, by referring to the installation location information included in the broadcast information of the respective femto base station apparatuses carried in the neighborhood base station list, the transmit power level adjustment instructing unit 544 may select the femto base station apparatuses in sequence starting with the one located closest to the mobile station apparatus 5. The closer the femto base station apparatus is to the mobile station apparatus 5, the greater the strength of the radiowaves arriving at the mobile station apparatus 5 from the femto base station apparatus, and the more likely that such radiowaves are the cause of radiowave interference. Accordingly, if the transmit power levels of the femto base station apparatuses are reduced in sequence starting with the one located closest to the mobile station apparatus 5, the mobile station apparatus 5 may be able to reduce the radiowave interference at an early stage.

Alternatively, the transmit power level adjustment instructing unit 544 may select the femto base station apparatuses in sequence starting with the one carried at the top or bottom of the neighborhood base station list. In this case, the location information acquiring unit 58 may be omitted.

If the transmit power level reduction request command is transmitted to other than the femto base station apparatus radiating the interfering radiowaves, then even if the femto base station apparatus that received the command reduces its radiowave transmit power, the radiowave interference will not decrease. That is, at the mobile station apparatus 5, the metric Qr will remain lower than the predetermined threshold value Th2. As earlier noted, the threshold value Th2 is a value determined by adding a prescribed offset value to the threshold value Th1.

In this case, since the femto base station apparatus that has reduced its radiowave transmit power may become unable to maintain radio links with other mobile station apparatuses, it is preferable to set the radiowave transmit power of the femto base station apparatus back to its original level. Therefore, the transmit power level adjustment instructing unit 544 passes to the communication control unit 541 the identification information of the femto base station apparatus that has reduced its transmit power level and the transmit power reduction release command for instructing the femto base station apparatus to set the transmit power level back to its original level.

As so far described above, in the mobile communication system, the mobile station apparatus actually experiencing the radiowave interference can request any one of the femto base station apparatuses located in the neighborhood of the serving macro base station apparatus to reduce its radiowave transmit power and can thereafter check whether the radiowave interference has actually been reduced. If the radiowave interference has not been reduced, the mobile station apparatus can request another one of the femto base station apparatuses to reduce its radiowave transmit power. The mobile communication system can thus identify the femto base station apparatus radiating the interfering radiowaves. Then, the mobile communication system can reduce the radiowave interference caused by the radiowaves radiating from the thus identified femto base station apparatus and, as a result, can enhance the received radiowave quality at the mobile station apparatus. Furthermore, in the mobile communication system, since the femto base station apparatuses other than the one radiating the interfering radiowaves are allowed to set the radiowave transmit power back to their original levels, the communication conditions can be prevented from degrading at other mobile station apparatuses not affected by the radiowave interference.

The present invention is not limited to the above embodiment. For example, the macro base station apparatus may not request the transmission of the neighborhood base station list from the upper node apparatus when the neighborhood base station list acquisition request is received from the mobile station apparatus; rather, the upper node apparatus may by itself transmit the neighborhood base station list to the macro base station apparatus. For example, the upper node apparatus may transmit the neighborhood base station list once every day, every week, or every month. Alternatively, each time any neighborhood base station list is created or updated, the upper node apparatus may transmit the created or updated neighborhood base station list to the corresponding macro base station apparatus. In this way, the upper node apparatus can perform the neighborhood base station list transmit process at different timing for each macro base station apparatus. This serves to prevent the processing load of the upper node apparatus from increasing due to a simultaneous occurrence of more than one neighborhood base station list acquisition request command to the upper node apparatus.

Further, each femto base station apparatus may transmit its corresponding neighborhood base station list to the mobile station apparatus radio-liked to it. In this case, the upper node apparatus transmits periodically (for example, once every day, every week, or every month) the neighborhood base station list and the identification information of the macro base station apparatus associated with it to each femto base station apparatus carried in the neighborhood base station list. When a radio link with a mobile station apparatus is established, the femto base station apparatus transmits the neighborhood base station list via a control channel to the mobile station apparatus together with the identification information of the macro base station apparatus associated with it. On the other hand, at the mobile station apparatus, the neighborhood base station list received from the femto base station apparatus is stored for a predetermined period of time after the radio link with that femto base station apparatus is disconnected as a result of a handover; this serves to eliminate the need for receiving the neighborhood base station list again from the femto base station apparatus.

Further, after the radiowave transmit power of the interfering femto base station apparatus has once been reduced in accordance with the transmit power reduction request command received from the mobile station apparatus, the interfering femto base station apparatus may maintain the reduced transmit power. This serves to prevent the radiowave reception conditions from degrading at some other mobile station apparatus due to radiowave interference caused by the radiowaves radiated from that femto base station apparatus.

The base station apparatuses need only be located proximate to each other so that radiowave interference may occur at the mobile station apparatus. For example, in the above embodiment, the macro base station apparatuses or the femto base station apparatuses may be replaced by so-called micro base station apparatuses having communication coverage areas of several tens to hundreds of meters in radius.

Further, the base station apparatuses, the upper node apparatus, and the mobile station apparatuses may each be an apparatus that complies with a communication standard other than the LTE. For example, the base station apparatuses, the upper node apparatus, and the mobile station apparatuses may each be an apparatus that complies with the International Telecommunications Union's IMT-2000 or the so-called fourth generation mobile communication system.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of superiority and inferiority of the invention. Although the embodiments of the present invention have been described in detail, it should be understood that the various changes, substitutions, and alterations could be made hereto without departing from the spirit and scope of the invention.

### DESCRIPTION OF THE REFERENCE NUMERALS

- 1: MOBILE COMMUNICATION SYSTEM
- 2-1, 2-2: MACRO BASE STATION APPARATUS
- 3-1 ∼ 3-4: FEMTO BASE STATION APPARATUS
- 4: UPPER NODE APPARATUS
- 5: MOBILE STATION APPARATUS
- 21, 31, 51: RADIO INTERFACE UNIT
- 22, 32, 52: ANTENNA
- 23, 33, 43: WIRED INTERFACE UNIT
- 24, 34, 42, 53: STORAGE UNIT
- 26, 36, 55: DUPLEXER
- 27, 37, 56: RADIO MODULATOR
- 28, 38, 57: RADIO DEMODULATOR
- 39, 58: LOCATION INFORMATION ACQUIRING UNIT
- 251, 351, 541: COMMUNICATION CONTROL UNIT
- 252, 352: CONTROL INFORMATION TRANSFER UNIT
- 253, 353, 542: COMMUNICATION PROCESSING UNIT
- 254: BASE STATION INFORMATION MANAGEMENT UNIT
- 354: LOCATION INFORMATION NOTIFYING UNIT
- 355: TRANSMIT POWER LEVEL ADJUSTING UNIT
- 543: RADIOWAVE QUALITY MEASURING UNIT
- 544: TRANSMIT POWER LEVEL ADJUSTMENT INSTRUCTING UNIT

## Claims

1. A mobile communication system comprising:
a first base station apparatus having a first communication coverage area;
at least one second base station apparatus having a second communication coverage area smaller than the first communication coverage area and capable of adjusting radiowave transmit power thereof; and
a mobile station apparatus capable of connecting via radio to the first base station apparatus or to the at least one second base station apparatus, wherein
when the mobile station apparatus is connected via radio to the first base station apparatus and is receiving a radiowave interfering with a radiowave received from the first base station apparatus, the mobile station apparatus transmits a transmit power reduction request command to any one of the second base station apparatuses to request reducing the radiowave transmit power thereof, and
of the second base station apparatuses, the base station apparatus that received the transmit power reduction request command from the mobile station apparatus reduces the radiowave transmit power.

2. The mobile communication system according to claim 1, wherein when the mobile station apparatus is receiving a radiowave interfering with a radiowave received from the first base station apparatus, the mobile station apparatus receives from the first base station apparatus a list of the second base station apparatuses potentially interfering with the radiowave arriving from the first base station apparatus, and selects from the list the base station apparatus to which the transmit power reduction request command is to be transmitted.

3. The mobile communication system according to claim 2, further comprising an upper node apparatus which is connected to the first mobile station apparatus and the at least one second mobile station apparatus, and which stores information indicating the communication coverage area of the first mobile station apparatus and acquires, from the at least one second base station apparatus, installation location information indicating the installation location of the second base station apparatus, and wherein:
based on the installation location information of each of the second base station apparatuses, the upper node apparatus identifies any second base station apparatus capable of transmitting a radiowave into the communication coverage area of the first base station apparatus, and creates the list so as to include the identified second base station apparatus, and
the first base station apparatus acquires the list from the upper node apparatus.

4. The mobile communication system according to any one of claims 1 to 3, wherein after transmitting the transmit power reduction request command to one of the second base station apparatuses carried in the list, the mobile station apparatus checks whether the radiowave interference caused to the radiowave received from the first base station apparatus has been reduced or not and, if the radiowave interference has not been reduced, then transmits the transmit power reduction request command to another one of the second base station apparatuses carried in the list.

5. The mobile communication system according to claim 4, wherein the list includes the installation location information associated with each of the second base station apparatuses carried in the list, and wherein
by referring to the installation location information associated with each of the second base station apparatuses carried in the list, the mobile station apparatus transmits the transmit power reduction request command to the second base station apparatuses in sequence, starting with the second base station apparatus located closest to the mobile station apparatus among the second base station apparatuses carried in the list.

6. The mobile communication system according to according to any one of claims 1 to 5, wherein, of the second base station apparatuses, the base station apparatus that received the transmit power reduction request command from the mobile station apparatus sets the radiowave transmit power back to its original level after a predetermined period has elapsed after reducing the radiowave transmit power.

7. A mobile station apparatus comprising:
a radio interface unit for connecting via radio with one of base station apparatuses;
a storage unit which stores a list of second base station apparatuses each capable of adjusting radiowave transmit power thereof and potentially interfering with a radiowave arriving from a first base station apparatus connected via radio with the radio interface unit, wherein the list is acquired from the first base station apparatus;
a radiowave quality measuring unit which measures quality of the radiowave received from the first base station;
a transmit power level adjustment instructing unit which, if the quality of the radiowave received from the first base station has degraded to a predetermined level, then selects one of the second base station apparatuses from the list and creates a transmit power reduction request command for requesting the selected second base station apparatus to reduce the radiowave transmit power; and
a transmission control unit which transmits the transmit power reduction request command to the selected second base station apparatus.

8. A base station apparatus comprising:
a storage unit;
an interface unit for connecting with an upper node apparatus;
a radio interface unit for connecting via radio with a mobile station apparatus located within a communication coverage area of the base station apparatus; and
a base station information management unit which, when a command for requesting acquisition of a list of other base station apparatuses, each having a communication coverage area that overlaps at least a portion of the communication coverage area of the base station apparatus, is received from the mobile station apparatus connected via radio with the base station apparatus, transmits the list to the mobile station apparatus if the list is stored in the storage unit but, if the list is not stored in the storage unit, then acquires the list from the upper node apparatus and transmits the list to the mobile station apparatus.

9. An upper node apparatus connected to a first base station apparatus having a first communication coverage area and also connected to at least one second base station apparatus having a second communication coverage area smaller than the first communication coverage area and capable of adjusting radiowave transmit power thereof, the upper node apparatus comprising:
a storage unit which stores information indicating the communication coverage area of the first base station apparatus;
an interface unit which acquires, from the at least one second base station apparatus, installation location information indicating the installation location of the second base station apparatus; and
a control unit which, based on the installation location information of each of the second base station apparatuses, identifies any second base station apparatus capable of transmitting a radiowave into the communication coverage area of the first base station apparatus, creates a list by including therein the identified second base station apparatus, and transmits the list to the first base station apparatus.

10. A radiowave interference reducing method for use in a mobile communication system that comprises a first base station apparatus having a first communication coverage area, at least one second base station apparatus having a second communication coverage area smaller than the first communication coverage area and capable of adjusting radiowave transmit power thereof, and a mobile station apparatus capable of connecting via radio to the first base station apparatus or to the at least one second base station apparatus, wherein:
the mobile station apparatus is connected via radio to the first base station apparatus and measures the quality of a radiowave received from the first base station apparatus;
if the quality of the received radiowave has degraded to a predetermined level, the mobile station apparatus selects one of the second base station apparatuses from a list of the second base station apparatuses, each having a communication coverage area that overlaps at least a portion of the communication coverage area of the first base station apparatus;
the mobile station apparatus transmits a transmit power reduction request command to the selected second base station apparatus to request reducing the radiowave transmit power thereof; and
of the second base station apparatuses, the base station apparatus that received the transmit power reduction request command from the mobile station apparatus reduces the radiowave transmit power.
